# EUROPÄISCHE PATENTSCHRIFT

(11) **EP 1 733 952 B1**
(45) Veröffentlichungstag und Bekanntmachung des Hinweises auf die Patenterteilung: **15.04.2009**
(21) Anmeldenummer: 06011716.5
(22) Anmeldetag: 07.06.2006
(51) Int. Cl.: B62D 25/16

(54) **Kraftfahrzeug mit einem Kotflügel**
Motor vehicle with a a wing
Véhicule automobile avec une aile

(30) Priorität: 14.06.2005 DE 102005027373
(43) Veröffentlichungstag der Anmeldung: 20.12.2006
(73) Patentinhaber: Bayerische Motoren Werke Aktiengesellschaft, 80809 München (DE)
(72) Erfinder: Haas, Thorsten, 85716 Lohhof (DE)

(56) Entgegenhaltungen:
- EP-A- 1 319 581
- DE-A1- 2 548 398
- DE-A1- 3 546 050
- DE-B3- 10 317 178

## Beschreibung

Die Erfindung betrifft ein Kraftfahrzeug mit einem Kotflügel nach dem Oberbegriff des Patentanspruchs 1. Ein solches Kraftfahrzeug ist in der DE 3 546 050 A1 offenbart.

Aus der EP 1 319 581 A2 ist ein Kraftfahrzeug mit einem Kotflügel aus Kunststoff bekannt, der über einen Halter seitlich an einer tragenden Karosserie des Kraftfahrzeugs angebunden ist.

Aufgabe der Erfindung ist es, ein Kraftfahrzeug mit einem Kotflügel zu schaffen, der so an die tragende Karosserie des Kraftfahrzeugs angebunden ist, dass auch nach einem Crash eine in Fahrtrichtung gesehen hinten an den Kotflügel angrenzende Seitentür sich noch öffnen lässt.

Diese Aufgabe wird mit einem Kraftfahrzeug mit einem Kotflügel mit den Merkmalen des Patentanspruchs 1 gelöst.

Erfindungsgemäß weist ein vorderer Kotflügel eines Kraftfahrzeugs eine Schwächung zumindest annähernd über die gesamte Höhe des Kotflügels im wesentlichen senkrecht zur Fahrzeuglängserstreckung auf, wobei die Schwächung in einer hinteren Stirnseite des Kotflügels angebracht ist, die an eine Seitentür angrenzt. Dadurch wird ein Ausknicken des Kotflügels in Fahrzeugquerrichtung erleichtert, wenn der Kotflügel bei einem Unfall im vorderen Bereich nach hinten gedrückt wird.

Bei einem Unfall eines Kraftfahrzeugs ist es aus Sicherheitsgründen wesentlich, dass sich auch nach einem Unfall alle Seitentüren öffnen lassen, sodass die Passagiere aussteigen können. Wenn sich bei einem Unfall der Kotflügel erheblich nach hinten verlagert, kann es passieren, dass er sich mit der angrenzenden Seitentür verkeilt, sodass diese nicht mehr oder nur mit hohem Kraftaufwand geöffnet werden kann. Durch die erfindungsgemäße Ausgestaltung des Kotflügels mit einer Schwächung wird sichergestellt, dass sich bei einem Unfall der Kotflügel nicht so weit nach hinten verlagert, dass er sich mit der Seitentür verkeilen kann. Stattdessen knickt der Kotflügel in Fahrzeugquerrichtung aus.

Die Schwächung des Kotflügels besteht bevorzugt aus einer Reihe von Durchbrüchen im Kotflügel. Diese Durchbrüche sollten aus optischen Gründen nur in einem nicht von außen sichtbaren Bereich des Kotflügels angeordnet sein. Alternativ ist aber auch jede andere Art einer Schwächung geeignet, wie beispielsweise eine geringere Blech- oder Materialdicke im Bereich der Schwächung als in den angrenzenden Bereichen des Kotflügels. Die Schwächung kann direkt an der geplanten Knickstelle angebracht sein. Alternativ dazu kann die Schwächung im Bereich der hinteren Anbindung des Kotflügels an die Karosserie vorgesehen sein. Sie stellt dann quasi eine Art Biegeachse dar. Bei einem Unfall knickt dann der Kotflügel vor der Schwächung aus. Dabei biegt sich der Kotflügel um die Schwächung, die sich vor der hinteren Anbindung befindet. Die dafür erforderlichen Biegekräfte im Bereich der Schwächung sind gering. Ohne die Schwächung wäre der Kotflügel durch die hintere Anbindung erheblich gegen ein Ausknicken versteift, da er dann im hinteren Bereich quasi fest eingespannt ist, während er sich so mit nur geringem Kraftaufwand um die Schwächung als Biegeachse verbiegen kann.

Bei den meisten Fahrzeugkarosserien ist der Kotflügel üblicherweise mit einem Stützträger der Karosserie verbunden, der von einer A-Säule - in Fahrtrichtung gesehen - nach vorne zumindest bis zu einer Federbeinaufnahme verläuft. Bei einem Unfall verlagert sich erfahrungsgemäß meist auch der Stützträger nach hinten. Bevorzugt ist der Kotflügel im hinteren Bereich über einen Halter an einem Stützträger der Karosserie angebunden. Der Halter weist günstigerweise eine Schräge auf, mit der er bei einer Verlagerung des Stützträgers nach hinten bei einem Unfall gegen die A-Säule gedrückt wird, wobei der Halter durch die Schräge dabei von der Fahrzeugmitte aus gesehen nach außen abgeleitet wird. Die allermeisten an einen Kotflügel hinten angrenzenden Seitentüren sind in ihrem vorderen Bereich an die Fahrzeugkarosserie über Scharniere angelenkt und erstrecken sich über ihre Scharnierachse hinaus nach vorne. Dadurch verschwenkt beim Öffnen der Seitentür dieser nach vorne über die Scharnierachse hinausragende Bereich nach innen zur Fahrzeugmitte hin. Durch das Ableiten des Kotflügels bei einem Unfall über den Halter nach außen wird sichergestellt, dass der Kotflügel sich nicht in den Verschwenkbereich des nach vorne über die Scharnierachse hinausragenden Bereich der Seitentür hinein verlagert. So ist sichergestellt, dass der Kotflügel auch nach einem Unfall das Verschwenken der Seitentür nicht behindert.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
Fig. 1 eine Seitenansicht eines Kraftfahrzeugs im Bereich eines vorderen Kotflügels,
Fig. 2 eine vergrößerte Ansicht des über einen Halter an die Karosserie des Kraftfahrzeugs angebundenen Kotflügels aus Fig. 1 aus einem Blickwinkel von schräg hinten,
Fig. 3 eine perspektivische Ansicht des an der Karosserie des Kraftfahrzeugs angebundenen Halters aus Fig. 2 und
Fig. 4 eine perspektivische Ansicht des Kotflügels aus Fig. 1 in einem Blickwinkel von schräg hinten.

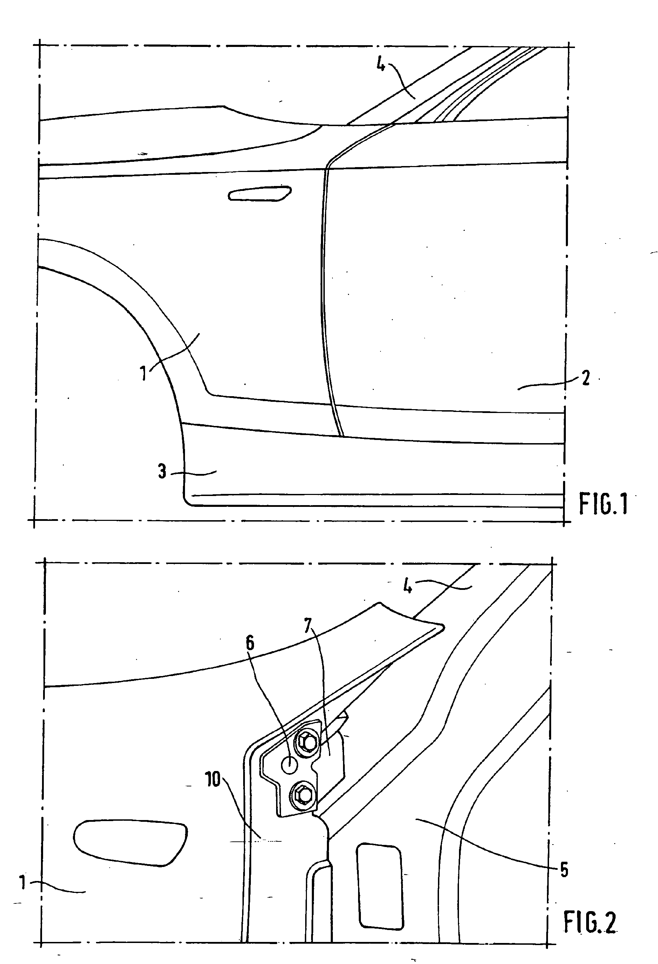

In Fig. 1 ist eine Seitenansicht eines Personenkraftwagens dargestellt. Zu sehen sind ein vorderer Kotflügel 1, an den in Fahrtrichtung gesehen hinten eine Seitentür 2 anschließt. Diese verschließt eine seitliche Türausschnittsöffnung in der Karosserie des Personenkraftwagens, die unten von einem Seitenschweller 3 begrenzt wird. In dem dargestellten Blickwinkel verdecken der hintere Bereich des Kotflügels 1 und der vordere Bereich der Seitentür 2 eine A-Säule der Fahrzeugkarosserie, die sich oberhalb der Türbrüstung als nach schräg oben und hinten erstreckender, seitlicher Windlauf 4 fortsetzt. Der seitliche Windlauf 4 bildet eine seitliche Begrenzung einer Windschutzscheibe.

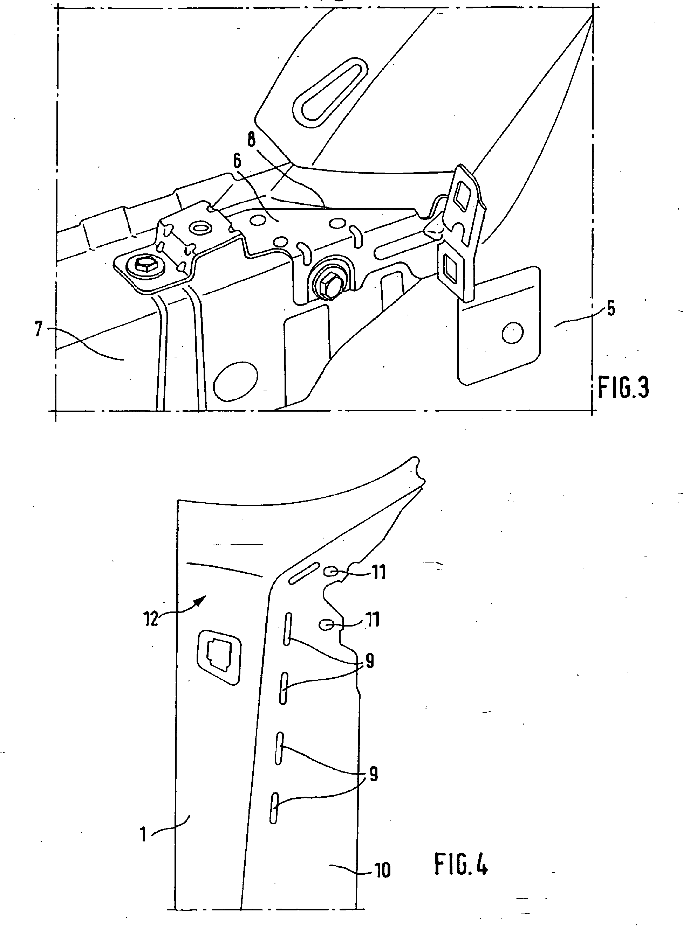

In Fig. 2 ist der Personenkraftwagen aus Fig. 1 vergrößert unter einem Blickwinkel von schräg hinten nach schräg vorne dargestellt. Zur besseren Veranschaulichung ist in Fig. 2 die Seitentür 2 nicht gezeigt. Dadurch ist die A-Säule 5 gut zu sehen. Die hintere Stirnseite 10 des Kotflügels 1, die der Seitentür 2 zugewandt ist, ist im hinteren Bereich mit einem Halter 6 verschraubt. Der Halter 6 wiederum ist an einem Stützträger 7 der Karosserie des Personenkraftwagens angeschraubt, wie es in Fig. 3 gut erkennbar ist. Der Stützträger 7 ist mit seinem hinteren Ende mit der A-Säule 5 verschweißt und erstreckt sich in Fahrtrichtung nach vorne zumindest bis zu einer Federbeinaufnahme. Die A-Säule 5 weist in ihrem vorderen an den Halter 6 angrenzenden Bereich im Querschnitt einen bogenförmigen, konvex nach vorne und zur Fahrzeugmitte hin gerichteten Verlauf auf. Der Halter 6 hat an seiner der A-Säule 5 zugewandten Hinterkante 8 einen schrägen Verlauf nach hinten und von der Fahrzeugmitte weg, sodass er quasi ein Gegenstück zur bogenförmigen A-Säule 5 bildet.

In Fig. 4 ist noch einmal der hintere Bereich des Kotflügels 1 mit seiner hinteren Stirnseite 10 dargestellt. Zwischen den Löchern 11 in der Stirnseite 10 zum Anschrauben des Halters 6 und der eigentlichen Sichtseite 12 des Kotflügels 1 befindet sich in der hinteren Stirnseite 10 annähernd über die gesamte Höhe der Stirnseite 10 eine Reihe von länglichen Durchbrüchen 9. Diese Durchbrüche 9 stellen eine erhebliche Schwächung des Kotflügels 1 dar.

Bei einem frontalen Unfall oder einem Unfall mit zumindest einer frontalen Komponente wird meist der Kotflügel 1 im vorderen Bereich nach hinten gedrückt. Dies darf aber zu keiner größeren Verlagerung des Kotflügels 1 im hinteren Bereich führen, da ansonsten der Kotflügel die angrenzende Seitentür 2 blockieren könnte, sodass diese nicht mehr oder nur mit großen Anstrengungen geöffnet werden kann. Andererseits soll der Kotflügel 1 im vorderen Bereich nachgiebig sein, damit der Personenkraftwagen eine ausreichende Knautschzone aufweist. Daher sollte der Kotflügel 1 bei einem solchen Unfall bevorzugt in Fahrzeugquerrichtung ausknicken. Das gewünschte Ausknicken ist in den Bereichen am wahrscheinlichsten, die sich am weitesten weg von den Anbindungen des Kotflügels an die Karosserie des Personenkraftwagens befinden. Ein konventioneller Kotflügel ist im vorderen Bereich und im hinteren Bereich mit der Karosserie verbunden. Aufgrund der relativ geringen Distanz zwischen diesen beiden Anbindungen erfolgt ein Ausknicken meist erst bei sehr hohen Kräften, die vorher den Kotflügel meist erheblich nach hinten verlagern.

Der erfindungsgemäße Kotflügel 1 ist auf klassische Weise im vorderen Bereich mit der Karosserie des Personenkraftwagens verbunden. Allerdings befindet sich im Kraftfluss zwischen der vorderen Anbindung und der hinteren Anbindung durch den Halter 6 die Schwächung mit den Durchbrüchen 9. Diese Durchbrüche 9 bilden quasi eine Achse, um die sich der Kotflügel 1 leicht verbiegen lässt. Damit ist der Kotflügel 1 als Knickstab quasi nicht mehr an beiden Enden fest eingespannt, sondern ein Ende - beim Kotflügel 1 der hintere Bereich - ist mit geringem Kraftaufwand drehbar eingespannt. Dadurch knickt der Kotflügel 1 wunschgemäß bereits bei wesentlich geringeren Kräften in Fahrzeugquerrichtung aus, als ein konventioneller Kotflügel 1, der als Knickstab beidseitig fest eingespannt ist. Der Kotflügel 1 ist also mit dem Halter 6 fest mit der Fahrzeugkarosserie verbunden, aufgrund der Durchbrüche 9 wirkt die hintere Anbindung aber nur geringfügig versteifend gegen ein Ausknicken.

So kann auf einfache Weise sichergestellt werden, dass sich die an den Kotflügel 1 angrenzende Seitentür 2 auch nach einem Unfall gut öffnen lässt. Sollte dennoch einmal der Kotflügel 1 nicht oder nicht ausreichend stark einknicken, verlagern sich bei einem schweren Unfall der Kotflügel 1 zusammen mit dem Halter 6 nach hinten. Dabei wird der Halter 6 mit seiner schrägen Hinterkante 8 gegen die bogenförmig nach vorne innen verlaufende Vorderkante der relativ steifen A-Säule 5 gedrückt. Bei einer weiteren Verlagerung des Halters 6 nach hinten wird dieser dadurch zur Fahrzeugaußenseite hin gedrückt. Der Kotflügel 1 schiebt sich dadurch von der Fahrzeugaußenseite gesehen vor die Seitentür 2. Die Seitentür 2 ist zwar im vorderen Bereich an die Karosserie des Personenkraftwagens angelenkt, sie erstreckt sich aber aus designtechnischen Gründen mit ihrem vordersten Abschnitt zumindest ein bisschen über die Scharnierachse nach vorne hinaus. Beim Verschwenken der Seitentür 2 zum Öffnen verschwenkt dadurch der vorderste Abschnitt nach innen zur Fahrzeugmitte hin. Durch das Ableiten des Kotflügels 1 über die schräge Hinterkante 8 des Halters 6 über die A-Säule zur Fahrzeugaußenseite hin wird das Verschwenken des vordersten Bereichs der Seitentür 2 nach innen nicht beeinträchtigt.

Durch die beschriebene Gestaltung des Halters 6 mit seiner schrägen Hinterkante 8 und einer entsprechenden bogenförmigen Gestaltung der A-Säule 5 als Gegenstück kann also gewährleistet werden, dass, wenn es schon zu einer deutlichen Verlagerung des Kotflügels 1 bei einem Unfall nach hinten kommt, sich dieser von der Fahrzeugaußenseite aus gesehen vor den vordersten Bereich der Seitentür 2 schiebt, sodass diese trotzdem beim Öffnen nicht ernsthaft behindert wird.

## Patentansprüche

1. Kraftfahrzeug mit einem vorderen Kotflügel (1), der eine Schwächung zumindest annähernd über die gesamte Höhe des Kotflügels (1) im wesentlichen senkrecht zur Fahrzeuglängserstreckung aufweist, **dadurch gekennzeichnet, dass** die Schwächung in einer hinteren Stirnseite (10) des Kotflügels (1) angebracht ist, die an eine Seitentür (2) angrenzt, sodass ein Ausknicken des Kotflügels (1) in Fahrzeugquerrichtung erleichtert wird, wenn der Kotflügel (1) bei einem Unfall im vorderen Bereich nach hinten gedrückt wird.

2. Kraftfahrzeug nach Anspruch 1, **dadurch gekennzeichnet, dass** die Schwächung aus einer Reihe von Durchbrüchen (9) im Kotflügel (1) besteht.

3. Kraftfahrzeug nach einem der vorhergehenden Ansprüche, **dadurch gekennzeichnet, dass** der Kotflügel (1) im hinteren Bereich über einen Halter (6) an einem Stützträger (7) der Karosserie angebunden ist, der von einer A-Säule (5) - in Fahrtrichtung gesehen - nach vorne zumindest bis zu einer Federbeinaufnahme verläuft.

4. Kraftfahrzeug nach Anspruch 3, **dadurch gekennzeichnet, dass** der Halter (6) eine Schräge (8) aufweist, mit der er gegen die A-Säule (5) gedrückt wird, wobei durch die Schräge (8) der Halter (6) dabei von der Fahrzeugmitte aus gesehen nach außen abgeleitet wird.

## Claims

1. A motor vehicle with a front mudguard (1) comprising a weak place extending at least approximately over the entire height of the mudguard (1) and substantially at right angles to the longitudinal extension of the vehicle, **characterised in that** the weak place is formed in a rear end face (10) of the mudguard (1) adjoining a side door (2), so that if the front region of the mudguard (1) is pressed from the rear during an accident it is easier for the mudguard (1) to bulge in the transverse direction of the vehicle.

2. A motor vehicle according to claim 1, **characterised in that** the weak place is made up of a row of openings (9) in the mudguard (1).

3. A motor vehicle according to any of the preceding claims, **characterised in that** the rear region of the mudguard (1) is connected by a holder (6) to a supporting member (7) of the body, the member (7), considered in the direction of travel, extending forwards from an A-column (5) at least as far as a spring leg holder.

4. A motor vehicle according to claim 3, **characterised in that** the holder (6) has a sloping part (8) by means of which it presses against the A-column (5), wherein the sloping part (8) moves the holder (6) outwards from the centre of the vehicle.

## Revendications

1. Véhicule automobile comportant une aile avant (1) ayant un affaiblissement s'étendant au moins pratiquement sur toute sa hauteur et de façon essentiellement perpendiculaire à la direction longitudinale du véhicule,
**caractérisé en ce que**
l'affaiblissement est réalisé dans la face frontale arrière (10) de l'aile (1), adjacente à une portière (2) pour faciliter le pliage de l'aile (1) dans la direction transversale à celle du véhicule lorsqu'en cas de collision dans la zone avant, l'aile (1) est repoussée vers l'arrière.

2. Véhicule automobile selon la revendication 1,
**caractérisé en ce que**
l'affaiblissement est constitué par une série de trous (9) réalisés dans l'aile (1).

3. Véhicule automobile selon l'une des revendications précédentes,
**caractérisé en ce que**
l'aile (1) est reliée dans sa partie arrière, par l'intermédiaire d'un support (6), à une poutrelle d'appui (7) de la carrosserie, cette poutrelle étant dirigée vers l'avant à partir de la colonne A (5) (selon le sens de circulation) au moins jusqu'au logement de la jambe à ressort.

4. Véhicule automobile selon la revendication 3,
**caractérisé en ce que**
le support (6) a une rampe (8) poussée contre la colonne A (5), la rampe (8) déviant le support (6) vers l'extérieur lorsqu'on regarde à partir du milieu du véhicule.
